(19) Europäisches Patentamt / European Patent Office / Office européen des brevets

(11) **EP 3 191 799 B1**

(12) **FASCICULE DE BREVET EUROPEEN**

(45) Date de publication et mention de la délivrance du brevet:
**11.11.2020 Bulletin 2020/46**

(51) Int Cl.:
*G01D 5/04* (2006.01)      *G01B 5/30* (2006.01)
*G01D 5/245* (2006.01)      *G01P 15/03* (2006.01)

(21) Numéro de dépôt: **15780913.8**

(22) Date de dépôt: **10.09.2015**

(86) Numéro de dépôt international:
**PCT/FR2015/000181**

(87) Numéro de publication internationale:
**WO 2016/038256 (17.03.2016 Gazette 2016/11)**

(54) **PROCÉDÉ DE COMPTAGE D'ÉVÉNEMENTS SURVENUS PENDANT UNE DURÉE T ET COMPTEURS MÉCANIQUES D'ÉVÉNEMENTS ASSOCIÉS**

VERFAHREN ZUM ZÄHLEN AUFTRETENDER EREIGNISSE WÄHREND EINES ZEITRAUMS T UND ZUGEHÖRIGE MECHANISCHE EREIGNISZÄHLER

METHOD FOR COUNTING EVENTS OCCURRING DURING A PERIOD T AND ASSOCIATED MECHANICAL EVENT COUNTERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2014 FR 1402022**

(43) Date de publication de la demande:
**19.07.2017 Bulletin 2017/29**

(73) Titulaires:
• **État Français représenté par le Délégué Général pour l'Armement**
**75509 Paris Cedex 15 (FR)**
• **Silmach**
**25000 Besançon (FR)**

(72) Inventeurs:
• **LOUVIGNÉ, Pierre-François**
**75012 Paris (FR)**
• **MINOTTI, Patrice**
**25660 Gennes (FR)**
• **SADOULET, Vianney**
**25870 Venise (FR)**
• **GIRARDIN, Pascal**
**25000 Besançon (FR)**
• **HAYE, Charles**
**25170 Chaucenne (FR)**

(74) Mandataire: **Cabinet Chaillot**
**16/20, avenue de l'Agent Sarre**
**B.P. 74**
**92703 Colombes Cedex (FR)**

(56) Documents cités:
EP-A2- 1 998 144      DE-A1- 19 821 467
FR-A1- 2 974 410

**Description**

L'invention concerne le domaine des compteurs mécaniques et a plus particulièrement pour objet, d'une part un procédé de comptage d'événements survenus pendant une durée T apte à être mis en œuvre par un compteur mécanique d'événements comportant au moins deux roues dentées et, d'autre part, des compteurs mécaniques associés.

On connait le brevet DE 19821467 qui décrit un compteur comportant au moins une première et une seconde roues dentées engrainant l'une sur l'autre et comportant un nombre de dents différent et un procédé de comptage du nombre de tours effectué par la première roue entre un instant ti et un instant tf à partir de la différence du nombre de dents dont ont tourné ces roues entre l'instant ti et l'instant tf.

Dans le domaine des MEMs on connait notamment les demandes de brevets EP 1 998 144 A2 qui décrit un compteur d'événements de type MEMS, et WO2012/143627 qui décrit un microcapteur passif et réversible de comptage d'événements et notamment du nombre de cycles de sollicitations subis par une structure pouvant par exemple correspondre au nombre de cycles de température, de sollicitations mécaniques en traction, compression et/ou flexion engendré, par exemple, par le passage de mobiles sur cette structure.

Ce microcapteur comporte des moyens de détection et de comptage des cycles de variations de distance entre deux points ou zones d'une structure, ces moyens comportant un support possédant une première et une seconde parties possédant chacune une zone d'ancrage, ces zones d'ancrage étant aptes à être fixées respectivement à l'une et à l'autre desdits deux points ou zones de la structure, les moyens de comptage étant associés à chacune des dites première et seconde parties du support.

Plus précisément, et comme montré sur la figure la, ce microcapteur comprend un support 101, principalement en forme de U comportant ainsi une première partie 102 et une deuxième partie 103 reliées entre-elles par une troisième partie 104 constituant la base du U, et des moyens de comptage 105 disposés sur le support et comportant au moins une première roue dentée 106 disposée sur ladite première partie 102 du support 101 et, d'une part, une poutre d'entraînement 107 de cette première roue dentée 106 fixée, à l'une, 108, de ses extrémités 108, 109, à ladite deuxième partie 103 et comportant, à son autre extrémité 109, une dent apte à constituer un engrenage 111 avec les dents de la première roue dentée 106, et d'autre part, un dispositif anti-retour 113 de la première roue dentée 106 et de telle sorte que le rapprochement des première et seconde parties 102, 103 du support 101 produit un entraînement de la roue dentée 106 par la dent d'entraînement de la poutre d'entraînement 107 tandis que l'éloignement de ces deux parties produit un maintien de la première roue dentée 106 par le dispositif anti-retour 113 et un escamotage de la dent de la poutre d'entraînement sur une dent de la première roue dentée 106. Les premières et secondes parties comportent des première et seconde zones d'ancrage, respectivement 224 et 225, constituées par des alésages dans chacun desquels peut être insérée une vis en vue de la fixation du microcapteur sur la structure à analyser telle par exemple que le parapet d'un pont.

Les première et seconde zones d'ancrage 224, 225 sont disposées respectivement selon un premier axe Y1 et un second axe Y2 parallèles entre eux et séparés par une distance L. D'une manière préférentielle permettant de réduire au minimum la taille du capteur, ces zones d'ancrages sont disposées de telle sorte que la longueur L soit la plus grande possible et de telle sorte que la déformation réversible de la structure entre les axes Y1 et Y2 soit au moins égale au pas P des dents de la roue de comptage. En effet, lorsque le microcapteur est fixé sur une structure soumise à une déformation réversible, la variation de distance entre les deux zones d'ancrage 224 et 225, donc entre les axes Y1 et Y2 est proportionnelle à cette longueur L. Par conséquent, pour un pas P donné des dents de la roue de comptage, et dans le cas de l'utilisation d'une seule poutre d'entraînement, la déformation de la structure entre les axes Y1 et Y2 doit au moins être égale à P et préférentiellement inférieure ou égale à 1,5.P pour pouvoir détecter un tel événement.

Dans ce type de microcapteur, l'axe de la roue de comptage est placé sur l'axe Y1 de la première partie 102 et la poutre d'entraînement 107 est solidaire de la seconde partie 103.

En d'autres termes, les moyens de comptage comportent au moins une roue dentée et des moyens d'entraînement en rotation de cette roue dentée d'un angle correspondant au pas des dents sur cette roue à chaque fois qu'un événement se produit.

Avec une seule roue, on peut compter, par rapport à une position initiale de la roue, un nombre de déformations réversibles successives égal au nombre de dents $Z1$ moins un que comporte cette roue car au-delà le nombre de déformations peut être :

$$N = k.Z1 + z1.$$

Avec

N nombre de déformations réversibles,

k : le nombre de tour effectué par la roue

Z1 : le nombre de dents de la roue

z1 position de la roue par rapport à sa position initiale correspondant au nombre de dents entre la position initiale et la position finale.

Comme, avec une seule roue, k n'est pas déterminable, N ne l'est pas non plus.

Pour pallier en partie cet inconvénient, cette demande de brevet décrit un mode de réalisation représenté sur la figure 1b dans lequel les moyens de comptage comportent une première roue dentée 54i ayant $Z_1$=1000 dents et une seconde roue dentée 150i ne comportant qu'une seule dent et solidaire en rotation de la première, cette deuxième roue 150i étant apte, de par son unique dent, à entrainer en rotation une troisième roue dentée 130i d'un angle correspondant au pas des dents sur cette troisième roue 130i à chaque fois que la première roue à fait un tour complet, cette troisième roue dentée 130i comportant $Z_2$=20 dents.

Ainsi, il est possible de compter sans ambiguïté, par rapport à une position initiale de ces trois roues, un nombre de déformations successives égal au produit $Z_1$*$Z_2$ = 20000.

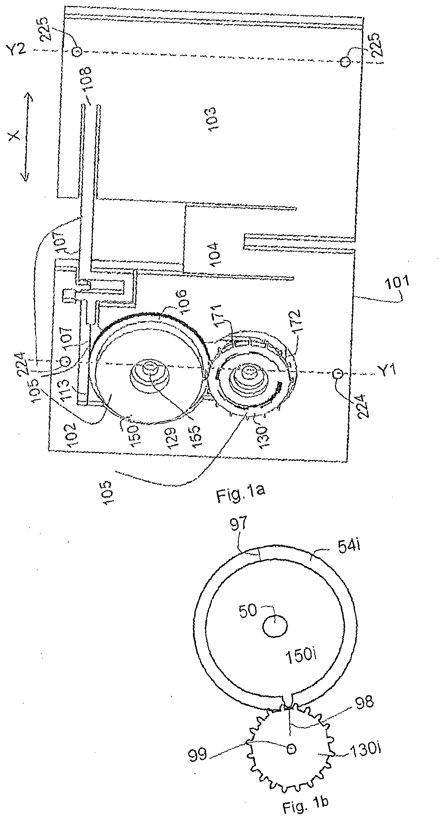

Toutefois, l'un des buts des MEMS est d'être le plus compact possible donc le moins encombrant. Le but de l'invention est de proposer un compteur plus compact que celui de ladite figure 1b pour compter le même nombre d'événement ou de proposer un compteur aussi volumineux mais qui permet de compter plus d'événements, typiquement de 10 à 1000 fois plus.

La solution apportée est un procédé selon la revendication de comptage d'événements survenus entre un temps ti et un temps tf correspondant à une durée T.

Selon une caractéristique particulière pouvant être mise en œuvre lorsque le nombre d'événements survenus est inférieur à la valeur $Z_i$*$Z_j$/PGCD($Z_i$, $Z_j$) :

-   une première étape comporte un comptage à partir du positionnement respectifs desdits repères respectivement aux instants ti et tf ou un calcul à partir des valeurs de déplacement angulaire mesurées respectivement instants ti et tf, pour au moins une première et une seconde roues $D_i$, $D_j$ à l'issue de la durée T, de l'écart du nombre de dents $Z_i$, respectivement $Z_j$ entre leur position initiale et leur position finale à l'issue de la durée T, cet écart étant compris dans l'intervalle [0, $Z_i$[ pour la première respectivement [0, $Z_j$[ pour la seconde,

-   une seconde étape consistant, pour au moins une valeur entière p comprise entre 0 et $P_{Max}$ avec :

$$p_{Max} = \frac{PPCM\left(Z_i, i \in \{1, 2, ..., n\}\right)}{Z_j} - \frac{PPCM\left(Z_i, i \in \{1, 2, ..., n\}\right)}{Z_i}$$

PPCM étant le plus petit commun multiple

-   soit à calculer le nombre de tours ki dont a tourné la première roue Di en fonction de la différence ($Z_j$ - $Z_i$) entre les valeurs du nombre de dents des première et seconde roues $D_i$, $D_j$ et de la différence ($Z_i$ - $Z_j$) entre les écarts comptés, pour chaque roue entre sa position initiale et sa position finale puis à calculer le nombre d'événements survenus pendant la durée T à partir de la formule suivante :

$$N = k_i \cdot Z_i + z_i$$

-   soit à calculer le nombre d'événements survenus pendant la durée T à partir de l'une des formules suivantes :

$$N = \left(\frac{z_i - z_j - p \cdot Z_j}{Z_j - Z_i}\right).Z_i + z_i \quad \text{ou} \quad N = \left(\frac{z_i - z_j - p \cdot Z_j}{Z_j - Z_i}\right).Z_j + z_j$$

Selon une caractéristique particulière, un procédé selon l'invention comporte une étape intermédiaire consistant à calculer, notamment lorsque $z_i$ est différent de $z_j$, le nombre de tours $k_i$, $k_j$ effectués par chacune des roues à partir des valeurs $z_i$ et $z_j$ et de la différence entre les valeurs $z_i$ et $z_j$.

Selon une caractéristique particulière mise en œuvre par un compteur mécanique ne comportant que deux roues dentées, un procédé selon l'invention comporte une étape de calcul du nombre d'événements survenus à partir de l'une des formules suivantes :

$$N=[(z_2-z_1)/(Z_1-Z_2)]*Z_1+z_1$$

$$N=[(z_2-z_1)/(Z_1-Z_2)]*Z_2+z_2$$

Lorsque le nombre d'éléments à compter est supérieur à Zi*Zj/PGCD(Zi, Zj), il est nécessaire de calculer le nombre d'événements survenus avec au moins trois roues dentées en appliquant par exemple le procédé suivant :

- une première étape consistant à compter, pour chacune des n roues dentées $D_1$ à $D_n$, à l'issue de la durée T l'écart du nombre de dents zi entre sa position initiale et sa position finale à l'issue de la durée T, cet écart étant compris dans l'intervalle [0 , $Z_i$-1],
- une seconde étape consistant à calculer une valeur Pmax telle que :

$$p_{Max} = \frac{PPCM(Z_i, i \in \{1, 2, ..., n\})}{Z_2} - \frac{PPCM(Z_i, i \in \{1, 2, ..., n\})}{Z_1}$$

- Une troisième étape consistant, pour p=0 à Pmax :

    ∘ dans une première phase à calculer le nombre de tour dont a tourné la première roue dentée D1 à partir de la formule :

$$k_1 = \frac{z_1 - z_2 - p \cdot Z_2}{Z_2 - Z_1}$$

    ∘ Dans une deuxième phase, pour i = 2 à n :

    • Calculer $k_i$ à partir de la formule suivante :

$$k_i = \frac{(k_1 + p) \cdot Z_2 + z_2 - z_i}{\bar{Z}_i} \qquad (5)$$

    • Déterminer si la valeur de ki est une valeur possible en vérifiant les conditions suivantes :
    •

$$\begin{cases} 0 \le k_i \le \dfrac{PPCM(Z_i, i \in \{1, 2, ..., n\})}{Z_i} - 1 \\ E(k_i) - k_i = 0 \end{cases} \qquad (6)$$

    $E(k_i)$ étant la partie entière de $k_i$

    - Si la valeur de ki est une valeur possible en vérifiant ces conditions (6) alors recommencer la deuxième phase pour une nouvelle valeur de « i » égale à i + 1 :
    - Si la valeur de ki ne vérifie pas ces conditions (6) alors sortir de la boucle en « i » et recommencer la troisième étape avec une nouvelle valeur de « p » égale à p + 1

- Si toutes les valeurs de ki sont possibles, sortir de la boucle en « p » et calcul du nombre de sollicitations à partir de la formule suivante :

$$N = k_1 \cdot Z_1 + z_1 = (\frac{z_1 - z_2 - p \cdot Z_2}{Z_2 - Z_1}).Z_1 + z_1$$

P étant la valeur pour laquelle tous les ki vérifient les conditions (6).

L'invention concerne aussi un compteur mécanique d'événements de type MEMS selon la revendication 6.
Un tel une compteur mécanique d'événements comporte :

- au moins deux roues dentées solidaires de l'un ou l'autre des premier et second supports, et une première roue dentée $D_i$ comportant $Z_i$ dents régulièrement espacées avec un pas $p_i$ et apte à tourner autour d'un premier axe et une seconde roue dentée $D_j$ en possédant $Z_j$ régulièrement espacées avec un pas $p_j$ et apte à tourner autour d'un second axe, chacune de ces roues dentées comportant au moins un repère radial apte à permettre d'attribuer à chaque dent de la roue un numéro d'ordre par rapport à ce repère,
- des moyens d'entrainement des deux roues dentées en rotation d'un angle égal aux pas $p_i$ et $p_j$ des dents lors de la survenance d'un événement à compter, et des moyens anti retour, et il est caractérisé en ce que $p_i$ et $p_j$ sont égaux et le nombre de dents $Z_i$ de la première roue dentée $D_i$ est différent de celui $Z_j$ de la seconde roue dentée $D_j$ et le PGCD de $Z_i$ et $Z_j$ est différent de $Z_i$ ou $Z_j$ et préférablement égal à 1.

Selon un mode de réalisation particulier, un compteur mécanique d'événements selon l'invention comporte des moyens optiques, par exemple une loupe, un appareil photo ou une caméra et, le cas échéant des moyens de traitement des signaux délivrés par les moyens optiques par exemple constitués par un ordinateur
Selon une caractéristique particulière, les moyens d'entrainement entrainent la première roue dentée $D_i$ par une première liaison de type engrenage et la première roue dentée entraine la seconde roue dentée par une seconde liaison aussi de type engrenage.
Selon une autre caractéristique, un compteur selon l'invention comporte :

des premiers moyens d'entrainement de la première roue dentée $D_i$ et des premiers moyens anti-retour de cette roue,
- des seconds moyens d'entrainement de la seconde roue dentée $D_j$ et des seconds moyens anti-retour de cette roue.

Selon une caractéristique additionnelle, les premier et second axes des roues dentées $D_i$ et $D_j$ sont colinéaires ou confondus et, préférentiellement, les aux moins deux roues sont superposées et placées du même côté du support.
Selon une autre caractéristique additionnelle, l'une des première et seconde roues dentées $D_i$, $D_j$ comporte des indications chiffrées ou colorées ou tout autre moyens permettant de déduire sa position angulaire tandis que l'autre comporte une ouverture sur une partie d'un secteur, cette ouverture rendant visible une partie des dites indications chiffrées ou colorées.
Ces compteurs peuvent être complètement passifs, c'est-à-dire ne pas nécessiter d'énergie pour fonctionner.
D'autres avantages et caractéristiques apparaîtront dans la description de plusieurs modes de réalisation de l'invention au regard des figures annexées parmi lesquelles :

- Les figures 2a et 2b montrent un premier exemple de réalisation d'un compteur mécanique permettant de mettre en œuvre un procédé selon l'invention, respectivement dans une position initiale et à l'issue d'une durée T.
- Les figures 3a et 3b montrent un second exemple de réalisation d'un compteur mécanique permettant de mettre en œuvre un procédé selon l'invention, respectivement dans une position initiale et à l'issue d'une durée T,
- La figure 3c présente un troisième exemple de réalisation d'un compteur mécanique permettant de mettre en œuvre un procédé selon l'invention,
- La figure 4 montre un quatrième exemple de réalisation d'un compteur mécanique permettant de mettre en œuvre un procédé selon l'invention,
- Les figures 5a à 5e montrent des exemples de réalisation des roues dentées pouvant être mises en œuvre dans le cadre de la figure 4,
- La figure 6 montre un cinquième exemple de réalisation d'un compteur mécanique permettant de mettre en œuvre un procédé selon l'invention.
- Les figures 7a et 7b montrent un autre exemple qui ne correspond pas à la présente invention d'un dispositif MEMS avec des moyens de mesure angulaire de type résistifs
- La figure 8 montre un autre exemple d'un dispositif MEMS qui ne correspond pas à la présente invention avec des moyens de mesure angulaire de type résistifs.

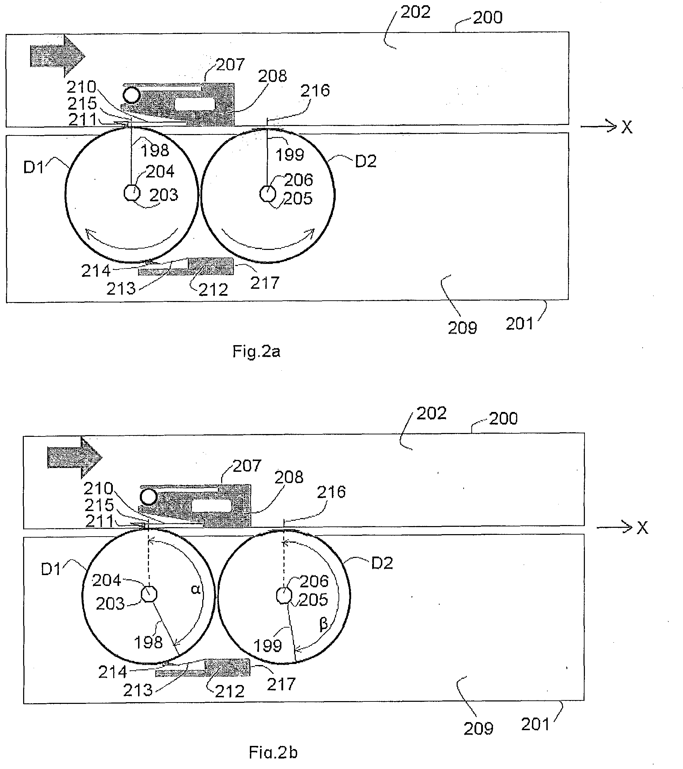

Les figures 2a et 2b montrent un premier exemple de réalisation d'un dispositif permettant de mettre en œuvre un procédé selon l'invention, respectivement dans une position initiale et à l'issue d'une durée T.

Ce dispositif comporte un premier support 200 apte à se déplacer cycliquement selon une direction longitudinale X par rapport à un second support 201 supposé fixe, le premier support reprenant sa position initiale après chaque déplacement. Il comporte aussi des moyens de comptage du nombre de déplacement pendant une durée T déterminée.

Ces moyens de comptage comportent :

- une première roue dentée $D_1$ comportant $Z_1$=1000 dents et un premier repère rectiligne radial 198 et étant disposée parallèlement à l'une des faces principales 209 du second support 201 et apte à tourner, via un alésage axial 203, autour d'un axe 204 fixée au second support 201,

- une seconde roue dentée $D_2$ comportant $Z_2$ = 999 dents, et un second repère rectiligne radial 199 et étant disposée parallèlement à la face principale 209 du second support 201 et apte à tourner, via un alésage axial 205, autour d'un axe 206 fixée au second support 201, les première et seconde roues étant agencées de sorte à former un engrenage, la première roues entrainant la seconde en rotation.

- Des moyens d'entrainement 207 de la première roue dentée $D_1$, ces moyens comportant une base 208 fixée sur l'une des faces principales 202 du premier support 200 et sur laquelle est fixée une poutre d'entrainement 210 disposée longitudinalement et comportant une dent 211 à son extrémité libre, cette dent étant agencée de sorte à former un engrenage avec la première roue dentée $D_1$

- Des moyens anti-retour 217 de la première roue dentée $D_1$ comportant une base 212 fixée sur la face principale 202 du second support en regard avec la roue dentée D, base sur laquelle est fixée une poutre 213 disposée longitudinalement et comportant une dent 214 à son extrémité libre, cette dent étant agencée de sorte à former un engrenage avec la première roue dentée $D_1$

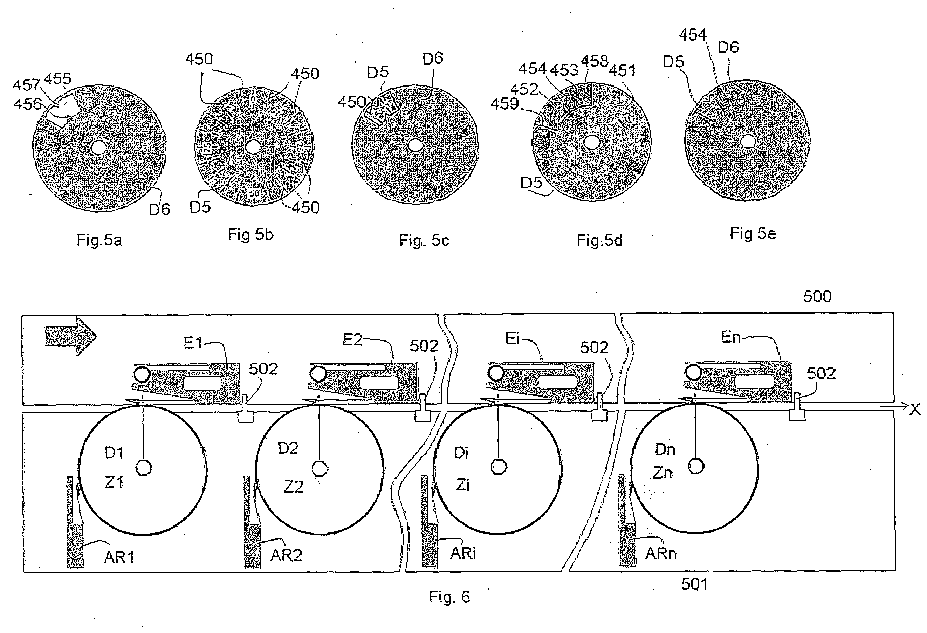

Ainsi, lorsque le premier support 200 se déplace selon la direction X par rapport au second support 201, la dent 211 des moyens d'entrainement entraine la première roue dentée $D_1$ en rotation dans le sens horaire indiqué par la flèche, cette première roue dentée $D_1$ entrainant elle-même la seconde roue dentée en rotation dans le sens anti-horaire indiqué par la flèche tandis que la dent 214 des moyens anti-retour glisse sur les dents de la première roue dentée de par la forme de la dent et l'élasticité de la poutre associée comme expliqué par exemple dans la demande de brevet WO2012/143627 au regard de la figure 5.

Lorsque le premier support 200 reprend sa position initiale par rapport au second support 201, la dent 214 des moyens anti-retour bloque la première roue dentée et l'empêche donc de tourner dans le sens anti-horaire contraire de celui indiqué par la flèche tandis que, de par la forme de la dent et l'élasticité de la poutre associée, la dent 211 des moyens d'entrainement glisse sur les dents de la première roue dentée comme expliqué par exemple dans la demande de brevet WO2012/143627 au regard de sa figure 5.

Dans cet exemple de réalisation, le premier support 200 comporte un troisième et un quatrième repères rectilignes 215, 216 pour permettre un positionnement initial des roues dentées dans une position connue. Pour cela, il suffit d'une part d'aligner le premier repère radial 198 de la première roue dentée $D_1$ avec le troisième repère rectiligne 215 et, d'autre part, d'aligner le second repère radial 199 de la seconde roue dentée $D_2$ avec le quatrième repère rectiligne 216.

La figure 2a montre les moyens de comptage dans leur position initiale à l'instant $t_i$ tandis que la figure 2b montre ces mêmes moyens de comptage dans une seconde position à l'issue d'une durée T, par exemple d'un an.

On constate que, par rapport à leur position initiale respective, la première roue dentée a tourné d'un angle $\alpha$ correspondant à $Z_1$ = 417 dents tandis que la seconde roue dentée $D_2$ a tourné d'un angle $\beta$ correspondant à $Z_2$ = 454 dents.

Pour calculer le nombre N de cycle de déplacement du premier support 200 par rapport au second support 201, il suffit ensuite d'appliquer un procédé selon l'invention, à savoir :

- compter, pour chacune des roues $D_i$, $D_j$, à l'issue de la durée T, l'écart du nombre de dents $Z_i$, respectivement $Z_j$ entre sa position initiale et sa position finale à l'issue de la durée T, cet écart étant compris dans l'intervalle [0 , $Z_i$[, respectivement [0 , $Z_j$[.
- Calculer le nombre d'événements survenus N en fonction de la différence entre les valeurs $Z_1$ et $Z_2$ et en fonction de $Z_1$ et/ou $Z_2$, voire de leur différence lorsque $Z_2$-$Z_1$>1, par exemple à partir de l'une des formules suivantes :

$$N=[(z_2\text{-}z_1)/(Z_1\text{-}Z_2)]*Z_1+ z_1 \qquad (1)$$

$$N=[(z_2-z_1)/(Z_1-Z_2)]*Z_2+ z_2 \qquad\qquad (2)$$

Comme Z1= 1000 et Z2=999, $(Z_1-Z_2)$ est égal à 1, les formules (1) et (2) se simplifient ce qui donne :

$$N=(z_2-z_1)*Z_1+ z_1 \qquad\qquad (3)$$

$$N=(z_2-z_1)*Z_2+ z_2 \qquad\qquad (4)$$

D'où, d'après (3)

$$N=(454-417)*1000+417 = 37417 \text{ évènements.}$$

Avec deux roues dentées, le nombre maximal Nm d'événements pouvant être compté sans risque d'ambiguïté, c'est-à-dire sans revenir dans la position initiale, est égal à :

$$Nm= PPCM\ (Z_1, Z_2)\ -1$$

PPCM étant le plus petit commun multiple.

Soit, dans ce cas,

$$Nm= 1000*999\ (-1)= 998999$$

D'une manière préférentielle, pour maximiser le nombre d'événements pouvant être compté, les nombres $Z_1$ et $Z_2$ sont choisis de sorte que leur plus grand commun diviseur soit égal 1. Le PGCD ne doit surtout pas être égal à $Z_1$ ou $Z_2$ car dans ce cas, la roue dentée comportant le moins de dents serait inutile.

Si le nombre maximal Nm d'événements devant être compté sans risque d'ambiguïté doit être supérieur à 998999, il faudra alors ajouter au moins une troisième roue dentée entrainée par la première ou par la seconde, cette troisième roue dentée comportant un nombre de dents différent de $Z_1$ et $Z_2$.

Pratiquement, pour déterminer les nombres $Z_1$ et $Z_2$ correspondant respectivement au nombre de dents dont a tourné, par rapport à leur position d'origine, chacune des dents D1 et D2, une possibilité consiste à mettre en œuvre des moyens optiques et, le cas échéant, des moyens de traitement des données issues de ces moyens optiques.

Le plus simple des moyens optiques peut consister en une loupe notamment dans le cas de l'utilisation du compteur dans un dispositif de type MEMS, l'opérateur comptant ensuite les nombres z1 et z2.

Les moyens optiques peuvent aussi par exemple consister en ceux décrits dans le brevet US 2002/0011840 mais ils nécessitent alors la présence d'une source d'énergie. Pour éviter cela, les moyens optiques peuvent consister en un appareil photo préférentiellement numérique, ou en une caméra pour produire une image des dites roues D1 et D2 et des troisième et un quatrième repères rectilignes 215, 216 puis d'agrandir l'image, ou de zoomer afin de permettre à un opérateur de compter ensuite le nombre de dents situées entre le repère du support et celui de la roue correspondante donc les nombres z1 et z2.

Les images obtenues par un appareil photo ou par une caméra peuvent aussi être traitées automatiquement par des moyens de traitement, constitués par exemple par un ordinateur et par un produit programme d'ordinateur. A titre d'exemple, après agrandissement de l'image, l'opérateur peut introduire le nombre de roues mises en œuvre, en l'occurrence deux dans cet exemple de réalisation et, pour chacune d'entre-elles, leur nombre total de dents. Il lui suffit ensuite de délimiter par un premier trait une première position correspondant au repère effectué sur le support et correspondant au positionnement de la roue à l'origine et par un second trait correspond à la position finale du repère de la roue, les moyens de traitement calculant alors l'angle formé entre ces premier et second traits puis le nombre de dents correspondant à cet angle, ce dernier nombre étant alors mis en mémoire.

A l'issue de ces calculs pour les deux roues, les moyens de traitement calculent puis affichent sur le moniteur le nombre d'événements survenus à partir des formules 1) et 2).

Une méthode encore plus automatique consiste à mettre en œuvre un logiciel de traitement d'image par reconnaissance de forme, voire en outre de reconnaissance de couleur, apte à déterminer la position des différents repères 198, 199, 215 et 216, puis à partir de ces informations et, si nécessaire, de l'introduction, par un opérateur du nombre total de dents de chacune des roues, les moyens de traitement calculent alors l'angle formé entre ces premier et second traits puis le nombre de dents correspondant à cet angle, ce dernier nombre étant mis en mémoire. A l'issue de ces calculs pour les deux roues, les moyens de traitement calculent puis affichent sur le moniteur le nombre d'événements survenus à partir des formules 1) et 2).

La lecture de la différence angulaire entre les deux roues peut aussi être réalisée par la mesure d'une grandeur physique de type électrique (résistance, capacité, variation magnétique.....etc.).

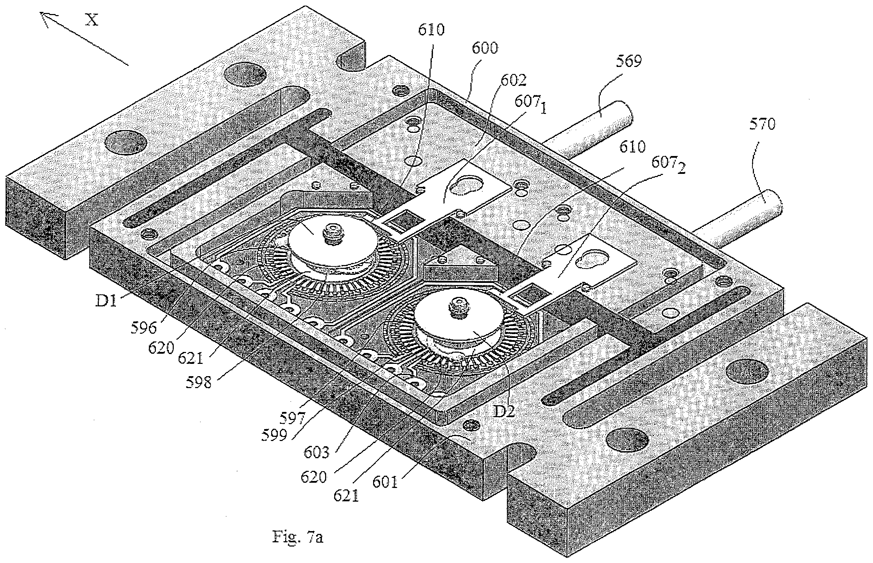

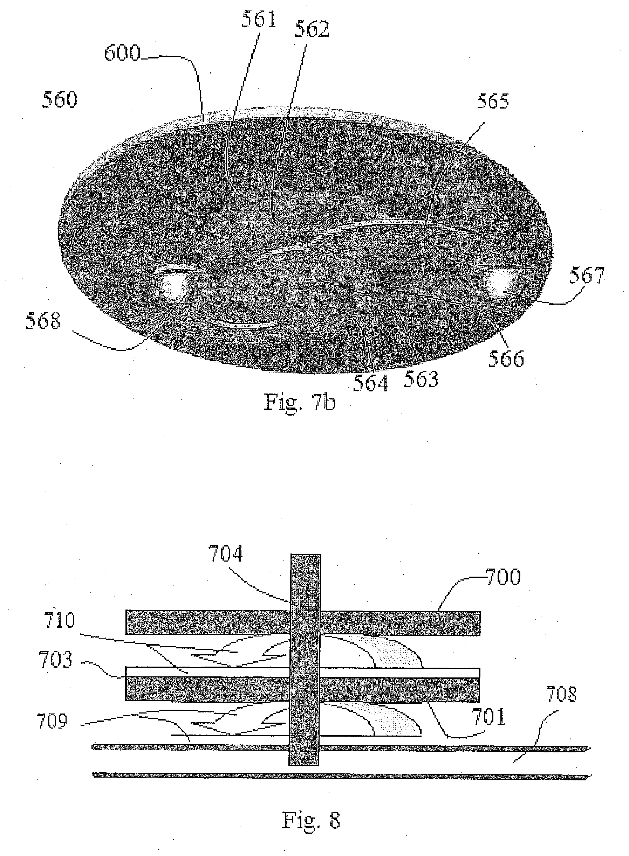

Ainsi, la détermination des nombres $Z_1$ et $Z_2$ correspondant respectivement au nombre de dents dont a tourné, par rapport à leur position d'origine, chacune des dents D1 et D2, peut être effectuée à partir de la mesure d'une grandeur électrique de type résistance variable selon l'angle de rotation des roue. Ce type de dispositif s'apparente à un potentiomètre et un exemple en est donné au regard des figures 7a et 7b, qui ne tombe pas sous l'étendue de protection de la présente invention.

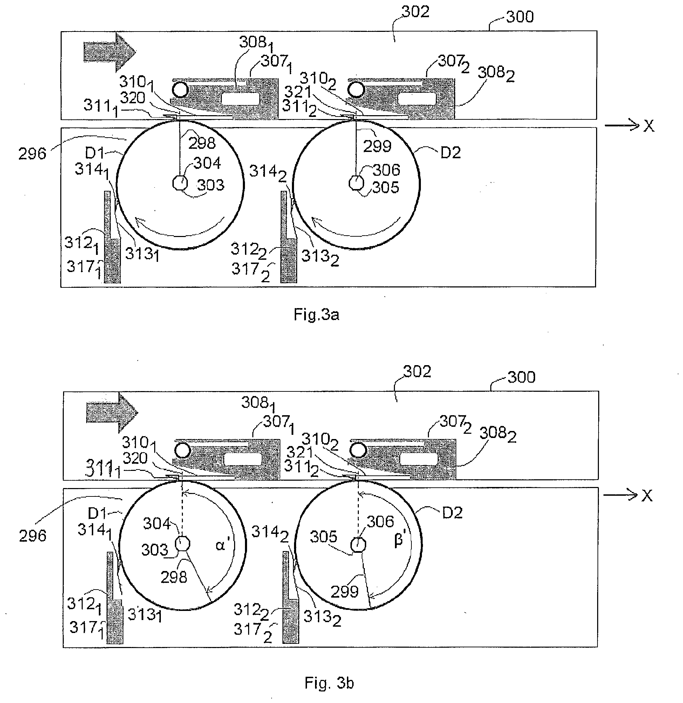

Les figures 3a et 3b montrent un second exemple de réalisation d'un dispositif permettant de mettre en œuvre un procédé selon l'invention, respectivement dans une position initiale et à l'issue d'une durée T.

Ce dispositif comporte un premier support 300 apte à se déplacer cycliquement selon une direction longitudinale X par rapport à un second support 301 supposé fixe, le premier support reprenant sa position initiale après chaque déplacement. Il comporte aussi des premier et second moyens de comptage du nombre de déplacement pendant une durée T déterminée.

Les premiers moyens de comptage 296 comportent :

- une première roue dentée $D_1$ comportant Z1=1000 dents et un premier repère rectiligne radial 298 et étant disposée parallèlement à l'une des faces principales 309 du second support 301 et apte à tourner, via un alésage axial 303, autour d'un axe 304 fixée au second support 301,

- des premiers moyens d'entrainement $307_1$ de la première roue dentée $D_1$, ces moyens comportant une base $308_1$ fixée sur l'une des faces principale 302 du premier support 300 et sur laquelle est fixée une poutre d'entrainement $310_1$ disposée longitudinalement et comportant une dent $311_1$ à son extrémité libre, cette dent étant agencée de sorte à former un engrenage avec la première roue dentée $D_1$,

- des premiers moyens anti-retour $317_1$ de la première roue dentée $D_1$ comportant une base $312_1$ fixée sur la face principale 309 du second support en regard avec la roue dentée $D_1$, base sur laquelle est fixée une poutre $313_1$ transversalement par rapport à la direction X et comportant une dent $314_1$ à son extrémité libre, cette dent étant agencée de sorte à former un engrenage avec la première roue dentée $D_1$

Les seconds moyens de comptage 297 comportent :

- une seconde roue dentée $D_2$ comportant $Z_2 = 999$ dents, et un second repère rectiligne radial 299 et étant disposée parallèlement à l'une des faces principales 309 du second support 301 et apte à tourner, via un alésage axial 305, autour d'un axe 306 fixée au second support 301, les première et seconde roues étant agencées de sorte à ne pas former un engrenage.

- Des second moyens d'entrainement $307_2$ de la seconde roue dentée $D_2$, ces moyens comportant une base $308_2$ fixée sur l'une des faces principales 302 du premier support 300 et sur laquelle est fixée une poutre d'entrainement $310_2$ disposée longitudinalement et comportant une dent $311_2$ à son extrémité libre, cette dent étant agencée de sorte à former un engrenage avec la seconde roue dentée $D_2$. Ces second moyens d'entrainement $307_2$ sont identiques aux premiers moyens d'entrainement et subissent les mêmes déplacements du premier support. Par conséquent, les premiers et moyens de comptage comptent les mêmes événements.

- Des seconds moyens anti-retour $317_2$ de la première roue dentée $D_2$ comportant une base $312_2$ fixée sur la face principale 309 du second support en regard avec la roue dentée $D_2$, base sur laquelle est fixée une poutre $313_2$ transversalement par rapport à la direction X comportant une dent $314_2$ à son extrémité libre, cette dent étant agencée de sorte à former un engrenage avec la première roue dentée $D_2$

Ainsi, lorsque le premier support 300 se déplace selon la direction X par rapport au second support 301, d'une part, la dent $311_1$ des premiers moyens d'entrainement 296 entrainent la première roue dentée $D_1$ en rotation dans le sens horaire indiqué par la flèche tandis que la dent $314_1$ des moyens anti-retour $317_2$ glisse sur les dents de la première roue dentée de par la forme de la dent et l'élasticité de la poutre associée et, d'autre part, la dent $311_2$ des seconds moyens d'entrainement 297 entrainent, simultanément, la seconde roue dentée $D_2$ en rotation dans le sens horaire indiqué par la flèche tandis que la dent $314_2$ des moyens anti-retour $317_2$ glisse sur les dents de la première roue dentée de par la forme de la dent et l'élasticité de la poutre associée.

Lorsque le premier support 300 reprend sa position initiale par rapport au second support 301, la dent $314_1$ des premiers moyens anti-retour $317_1$ bloque la première roue dentée et l'empêche donc de tourner dans le sens anti-horaire contraire de celui indiqué par la flèche tandis que, de par sa forme de la dent et l'élasticité de la poutre associée, la dent $311_1$ des premier moyens d'entrainement 296 glisse sur celles de la première roue dentée $D_1$. De même, la dent 3142 des seconds moyens anti-retour $317_1$ bloque la seconde roue $D_2$ dentée et l'empêche donc de tourner dans le sens anti-horaire contraire de celui indiqué par la flèche tandis que, de par sa forme et l'élasticité de la poutre associée, la dent $311_2$ des seconds moyens d'entrainement 297 glisse sur celles de la seconde roue dentée $D_2$.

Dans cet exemple de réalisation, le premier support 300 comporte un troisième et un quatrième repères rectilignes 320, 321 pour permettre un positionnement initial des roues dentées $D_1$ et $D_2$ dans une position connue. Pour cela, il suffit d'une part d'aligner le premier repère radial 298 de la première roue dentée $D_1$ avec le troisième repère rectiligne 320 et, d'autre part, d'aligner le second repère radial 199 de la seconde roue dentée $D_2$ avec le quatrième repère rectiligne 321.

La figure 3a montre les moyens de comptage dans leur position initiale à l'instant $t_i$ tandis que la figure 3b montre ces mêmes moyens de comptage dans une seconde position à l'issue d'une durée T, par exemple d'un an.

On constate que, par rapport à leur position initiale respective, la première roue dentée a tourné d'un angle a' correspondant à $z_1 = 420$ dents tandis que la seconde roue dentée $D_2$ a tourné d'un angle $\beta'$ correspondant à z2 = 450 dents.

En appliquant, le procédé selon l'invention décrit précédemment, on en déduit le nombre d'événements comptés, à savoir :

$$N=(450-420)*1000+420 = 30420 \text{ évènements.}$$

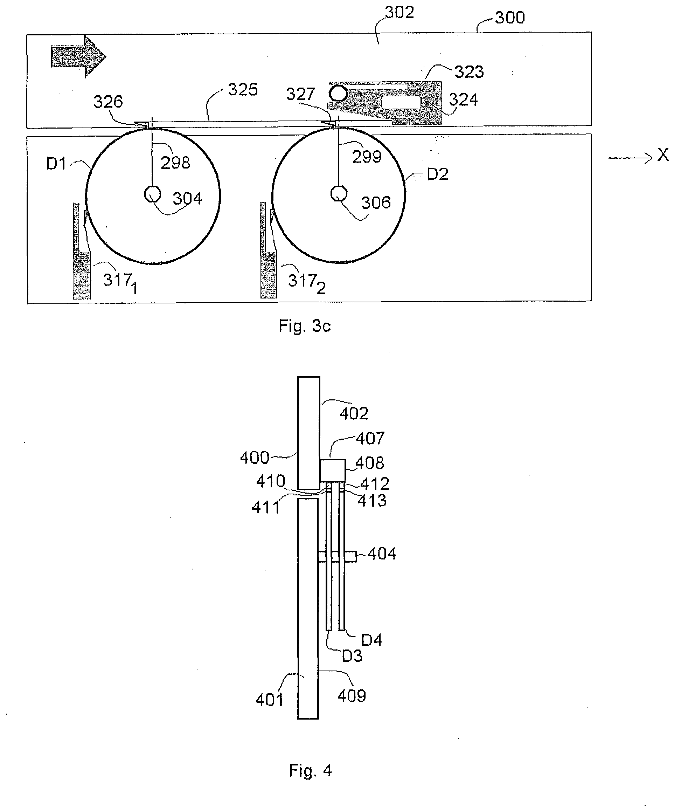

Le troisième exemple de réalisation de la figure 3c diffère de celui de la figure 3a en ce que les premiers et seconds moyens d'entrainement sont remplacés par des troisième moyens d'entrainement 323 comportant une base 324 fixée sur l'une des faces principale 302 du premier support 300 et sur laquelle est fixée une poutre d'entrainement 325 disposée longitudinalement et comportant, d'une part, une première dent 326 à son extrémité libre, cette dent étant agencée de sorte à former un engrenage avec la première roue dentée $D_1$ et , d'autre part, une seconde dent 327 agencée de sorte à former un engrenage avec la seconde roue dentée $D_2$.

En fonctionnement, tout déplacement du premier support 300 par rapport au second support 301 selon la direction X produit le même déplacement sur les troisièmes moyens d'entrainement qui entrainent les première et seconde roues dentées $D_1$ et $D_2$ en rotation dans le sens horaire produisant un accroissement du nombre d'événements comptés dès lors que ce déplacement est supérieur ou égal au pas des dents sur les roues $D_1$ et $D_2$.

La figure 4 montre un quatrième exemple de réalisation d'un dispositif permettant de mettre en œuvre un procédé selon l'invention.

Ce dispositif comporte un premier support 400 apte à se déplacer cycliquement selon une direction longitudinale X par rapport à un second support 401 supposé fixe, le premier support 400 reprenant sa position initiale après chaque déplacement. Il comporte aussi des moyens de comptage du nombre de déplacement pendant une durée t déterminée.

Ces moyens de comptage comportent :

- une troisième roue dentée $D_3$ comportant Z3=999 dents et un première repère rectiligne radial et étant disposée parallèlement à l'une des faces principales 409 du second support 401 et apte à tourner, via un alésage axiale, autour d'un axe 404 fixé au second support 401,

- une quatrième roue dentée $D_4$ comportant $Z_4 = 997$ dents, et un second repère rectiligne radial et étant disposée parallèlement à la troisième roue dentée $D_3$ et apte à tourner, via un alésage axiale, autour dudit axe 404,

- Des moyens d'entrainement 407 des troisième et quatrième roues dentée D3, D4, ces moyens comportant une base 408 fixée sur l'une des faces principales 402 du premier support 400 et sur laquelle est fixée, d'une part, une première poutre d'entrainement 410 disposée longitudinalement et comportant une dent 411 à son extrémité libre, cette dent étant agencée de sorte à former un engrenage avec la troisième roue dentée D3 et, d'autre part, une seconde poutre d'entrainement 412 disposée longitudinalement et comportant une dent 413 à son extrémité libre, cette dent étant agencée de sorte à former un engrenage avec la quatrième roue dentée $D_4$.

En fonctionnement, tout déplacement du premier support 400 par rapport au second support 401 selon la direction X produit le même déplacement sur les moyens d'entrainement 407 qui entrainent les troisième et quatrième roues dentées $D_3$ et $D_4$ en rotation dans le sens horaire produisant un accroissement du nombre d'événements comptés dès lors que ce déplacement est supérieur ou égal au pas des dents sur les roues D3 et D4.

Avec une configuration selon la figure 4, il est possible, dans certains cas, de simplifier considérablement les premières et secondes étapes du procédé selon l'invention. Les équations (1) et (2), à savoir,

$$N=[(z_2-z_1)/(Z_1-Z_2)]*Z_1+ z_1 \qquad\qquad (1)$$

$$N=[(z_2-z_1)/(Z_1-Z_2)]*Z_2+ z_2 \qquad\qquad (2)$$

montrent que pour calculer N, il est nécessaire de connaître, en plus du nombre de dents $Z_1$ et $Z_2$ de chacune des roues, la différence $(z_2-z_1)$ et $z_1$ ou $z_2$.

De plus, on constate que plus la différence $(z_2-z_1)$ augmente, plus la valeur $z_1$ ou $z_2$ devient négligeable par rapport aux produits $(z_2-z_1)/(Z_1-Z_2)]*Z_1$ ou $(z_2-z_1)/(Z_1-Z_2)]*Z_2$.

A titre d'exemple, l'influence maximale que peut avoir $z_2$, supposée dans ce cas égale à $Z_2-1$, sur le calcul de Nmax à partir de l'équation (2) est indiquée, pour différentes valeurs de $(z_2-z_1)$, dans le tableau 1 pour un premier cas où Z1=1000 et Z2=999, et dans le tableau 2 pour un deuxième cas où Z1=100 et Z2=99 et dans le tableau 3 pour un troisième cas où Z1=10 et Z2=9..

Tableau 1

| z2-z1 | Nmax | z2/N |
|---|---|---|
| 1 | 1997 | 50,0% |
| 9 | 9989 | 10,0% |
| 99 | 99899 | 1,0% |
| 999 | 998999 | 0,1% |

Tableau 2

| z2-z1 | Nmax | z2/Nmax |
|---|---|---|
| 1 | 197 | 50,0% |
| 9 | 989 | 9,1% |
| 99 | 9899 | 1,0% |

Tableau 3

| z2-z1 | Nmax | z2/Nmax |
|---|---|---|
| 1 | 17 | 50,0% |
| 9 | 89 | 9,1% |

On constate par exemple que dans les premiers et seconds cas, une erreur maximale de 1% sur le calcul de N est engendrée si le terme $z_2$ est négligé par rapport au produit $(z_2-z_1)/(Z_1-Z_2)]*Z_2$ lorsque le nombre d'événement compté est supérieur respectivement à 99899 et 9899.

Dans le cadre de ces exemples, chaque fois que la roue D1 fait 1 tour, la roue D2 tourne d'un tour plus d'un angle correspondant à celui d'une dent. Par conséquent, entre les instants ti et tf correspondant à une durée T, le décalage entre les deux roues correspondra directement et physiquement à la différence $z_2-z_1$ et indirectement au nombre d'événements survenus.

Aussi, dans la configuration de la figure 4, il est possible de déterminer directement la différence $(z_2-z_1)$ et, éventuellement le produit $(z_2-z_1)/(Z_1-Z_2)]*Z_1$ ou le produit $(z_2-z_1)/(Z_1-Z_2)]*Z_2$.

Les figures 5a à 5e montrent des exemples de réalisation des roues dentées pouvant être mises en œuvre dans la configuration de la figure 4 et permettant de déterminer directement la différence $(z_2-z_1)$) et, éventuellement, le produit $(z_2-z_1)/(Z_1-Z_2)]*Z_1$ ou le produit $(z_2-z_1)/(Z_1-Z_2)]*Z_2$ La figure 5a montre un exemple de réalisation d'une sixième roue dentée $D_6$ comportant 999 dents. Cette dernière comporte une ouverture 455 sur une partie d'un secteur correspondant par exemple à environ 10% de sa périphérie ainsi que, dans la partie médiane du secteur 455, des parties saillantes 456, 457 de la roue en forme de triangle équilatéral et se faisant face et destinées à servir de repère de lecture et de repère de positionnement initial. Les figures 5b et 5c montrent un premier exemple de réalisation de la cinquième roue dentée $D_5$ comportant 1000 dents, respectivement seule et en association avec la sixième roue dentée $D_6$.

Dans l'exemple de réalisation de la figure 5b, la cinquième roue dentée $D_5$ comporte des repères radiaux constitués par des indications chiffrés 450 régulièrement répartis, par exemple tous les 5% de la capacité totale de 998999 évènements correspondant à un décalage de 999 dents entre les deux roues, et ce de 0% à 95%. Bien évidemment, les indications peuvent correspondre directement à l'un des produits $(z_2-z_1)/(Z_1-Z_2)]*Z_1$ ou $(z_2-z_1)/(Z_1-Z_2)]*Z_2$. Au temps ti, le repère « 0 » de la cinquième roue est positionné en face du repère constitué par les parties saillantes 456, 457 de la sixième roue.

Pour simplifier au maximum la mise en œuvre de ces roues, en fonctionnement, la sixième roue dentée $D_6$ qui a une dent de moins que la cinquième va tourner légèrement plus vite que cette dernière, cette différence de vitesse produisant un décalage des roues à chaque tour de la cinquième, ce décalage se traduisant par un décalage correspondant des indications chiffrées par rapport au repère constitué par le rayon de la sixième roue $D_6$ passant par les parties saillantes 456 et 457.

Sur la figure 5c, le rayon de la roue dentée passant par les pointes des dites parties saillantes 456, 457 est compris entre les indications chiffrées 15 et 20% et, plus exactement, par interpolation est sur la valeur d'environ 18%. Cela signifie que le nombre d'événements ayant été comptés est environ égal au produit :

$$N=18\% * Nm= 18\% *(1000 * 999-1)= 179819 \text{ évènements.}$$

Dans l'exemple de réalisation de la figure 5d, la cinquième roue dentée $D_5$ comporte des repères radiaux constitués par des indicateurs colorés et par un repère « 0 » devant être positionné au temps ti en face du repère constitué par les parties saillantes 456, 457 de la sixième roue. La lecture se fait alors grâce à trois secteurs colorés permettant de connaitre la position du système par rapport à la capacité de mémoire totale :

  ▪ Un premier secteur 451 de couleur verte pour des positions allant par exemple de 0% à 80% de la capacité totale et correspondant à 80% de la périphérie de la roue,
  ▪ Un second secteur 452 de couleur orange pour des positions allant par exemple de 80% et 90% de la capacité totale et correspondant à 10% de la périphérie de la roue,
  ▪ Un troisième secteur 453 de couleur rouge pour des positions allant de 90% à 100% et correspondant à 10% de la périphérie de la roue

En fonctionnement, la sixième roue dentée $D_6$ qui a deux dents de moins que la troisième va tourner légèrement plus vite que cette dernière, cette différence de vitesse produisant un décalage des roues à chaque tour de la troisième, ce décalage se traduisant par un décalage correspondant des secteurs colorés par rapport au repère constitué par le rayon de la sixième roue passant par les parties saillantes 456 et 457.

Jusqu'à 80% de la capacité maximale de comptage sans ambiguïté, le rayon de la quatrième roue dentée passant par les pointes des dites parties saillantes 456, 457 se trouve dans le premier secteur 451 en vert et il n'est pas possible de déterminer le nombre d'événements survenus directement à partir des couleurs si au moins la transition 459 entre le secteur vert 451 et le secteur orange 452 n'apparait pas dans l'ouverture 455.

De 80% à 90% de la capacité maximale de comptage sans ambiguïté, le rayon de la sixième roue dentée passant par les pointes des dites parties saillantes 456, 457 se trouve dans le second secteur en orange.

De 90% à 100% de la capacité maximale de comptage sans ambiguïté, le rayon de la sixième roue dentée passant par les pointes des dites parties saillantes 456, 457 se trouve dans le troisième 453 secteur en rouge.

Lorsqu'apparaît le secteur en rouge dans l'ouverture, on peut :

- soit calculer approximativement le nombre d'événement compté soit environ 88%*Nm sur la figure 5e, la transition 454 entre les second et troisième secteurs 452, 453, permettant de déterminer ce pourcentage avec une bonne précision
- soit, pour un décompte exact, déterminer pour chaque roue le nombre de dents $z_1$, $z_2$ dont elle a tourné par rapport à leur position initiale puis appliquer le procédé selon l'invention comme décrit par exemple en regard des figures 2a et 2b, sachant que dans ce cas la différence $(Z_1-Z_2)$ est égale à 1.

Ensuite, les roues peuvent être à nouveau positionnées dans leur position initiale, à savoir l'indication chiffrée 0% ou la limite 458 entre le premier secteur vert et le troisième secteur rouge est positionnée sur le rayon de la sixième roue dentée passant par les pointes des dites parties saillantes 456, 457, ce rayon étant aussi mis en correspondance avec un repère présent sur le premier support 400.

Pratiquement, pour déterminer la différence ($z_1$ - $z_2$), une possibilité consiste à mettre en œuvre des moyens optiques et, le cas échéant, des moyens de traitement des données issues de ces moyens optiques, comme par exemple une calculatrice.

Le plus simple des moyens optiques peut consister en une loupe, l'opérateur ayant soit directement une indication chiffrée en pourcentage du nombre totale d'événements pouvant être comptés sans ambiguïté, voire du nombre de d'événement survenus, en face du repère constitué par les parties saillantes 456, 457 comptant ensuite les nombres z1 et z2, soit d'une indication colorée permettant d'indiquer par exemple la survenance d'un seuil ou tout simplement d'estimer la différence ($z_2$-$z_1$) ou le nombre d'événements.

Bien évidemment, lorsque la cinquième roue comporte des indications chiffrées de nombre d'événements, l'utilisation de la loupe pour lire lesdites indications met en œuvre automatiquement les premières et secondes étapes du procédé. Lorsque la cinquième roue comporte une indication en pourcentage ou en valeur de $z_2$-$z_1$, il est alors nécessaire de procéder, en outre, à la seconde étape du procédé selon l'invention.

De plus, d'autres moyens optiques qu'une loupe comme par exemple ceux décrits dans le cadre des figures 2a et 2b peuvent être mis en œuvre.

La figure 6 montre un cinquième exemple de réalisation d'un dispositif permettant de mettre en œuvre un procédé selon l'invention.

Ce dispositif comporte un premier support 500 apte à se déplacer cycliquement selon une direction longitudinale X par rapport à un second support 501 supposé fixe, le premier support reprenant sa position initiale après chaque déplacement. Il comporte aussi des moyens de comptage du nombre de déplacement pendant une durée t déterminée.

Ces moyens de comptage comportent n roues dentées $D_1$ à $D_n$ ainsi que n moyens d'entrainement $E_1$ à $E_n$ et n moyens anti-retours associés semblables à ceux montrés sur la 3a. Les n roues dentées $D_1$ à $D_n$ comportent respectivement Zi dents, avec, pour maximiser la capacité totale de comptage, chaque roue dentée ayant un nombre de dents différent de celui de toutes les autres et le pas des dents étant le même pour toutes les roues dentées. De plus, le second support comporte des moyens 502 aptes à limiter le déplacement des moyens d'entrainement à une valeur sensiblement égale à 1,5 fois le pas des dents des roues dentées comme explicité dans la demande de brevet WO2012143627 au regard de sa figure 4c.

En fonctionnement, tout déplacement du premier support 500 par rapport au second support 501 selon la direction X produit le même déplacement sur les n moyens d'entrainement $E_1$ à $E_n$, voire moins si ces derniers viennent en butée contre les moyens 502 de limitation de leur déplacement, ces n moyens d'entrainement $E_1$ à $E_n$ entrainant, respectivement, les n roues dentées $D_1$ à $D_n$ en rotation dans le sens horaire produisant un accroissement du nombre d'événements comptés dès lors que ce déplacement est supérieur ou égal au pas des dents des roues et que les moyens anti-retour AR retiennent les roues lorsque le premier support reprend sa position initiale par rapport au second support.

Un procédé de détermination, à partir d'une position initiale connue des différentes roues, du nombre d'évènements comptés pendant une durée T peut-être le suivant :

- Une première étape consistant à compter, pour au moins une première et une seconde roues Di, Dj à l'issue de la durée T, l'écart du nombre de dents zi, respectivement zj entre leur position initiale et leur position finale à l'issue de la durée T, cet écart étant compris entre 0 et ($Z_i$ - 1) pour la première et 0 et (Zj - 1) pour la seconde,

- Une seconde étape consistant, pour au moins une valeur entière p comprise entre 0 et $P_{Max}$ avec :

$$p_{Max} = \frac{PPCM(Z_i, i \in \{1, 2, ..., n\})}{Z_2} - \frac{PPCM(Z_i, i \in \{1, 2, ..., n\})}{Z_1}$$

- soit à calculer le nombre de tours ki dont a tourné la première roue Di en fonction de la différence ($Z_j$ - $Z_i$).entre les valeurs du nombre de dents des première et seconde roues $D_i$, $D_j$ et de la différence ($z_i$ - $z_j$) entre les écarts comptés, pour chaque roue entre sa position initiale et sa position finale puis à calculer le nombre d'événements survenus pendant la durée T à partir de la formule suivante :

$$N = k_i \cdot Z_i + z_i$$

■ soit à calculer le nombre d'événements survenus pendant la durée T à partir de la formule suivante: :

$$N = (\frac{z_i - z_j - p \cdot Z_j}{Z_j - Z_i}).Z_i + z_i$$

Lorsque le nombre d'éléments à compter est supérieur à Zi*Zj/PGCD(Zi, Zj), il est nécessaire de calculer le nombre d'événements survenus avec au moins trois roues dentées en appliquant par exemple le procédé suivant :

- Une première étape consistant à compter, pour chacune des n roues dentées $D_1$ à $D_n$, à l'issue de la durée T l'écart du nombre de dents zi entre sa position initiale et sa position finale à l'issue de la durée T, cet écart étant compris dans l'intervalle [0, $Z_i$-1]
- Une seconde étape consistant à calculer une valeur Pmax telle que :

$$p_{Max} = \frac{PPCM(Z_i, i \in \{1, 2, ..., n\})}{Z_2} - \frac{PPCM(Z_i, i \in \{1, 2, ..., n\})}{Z_1} \quad .$$

- Une troisième étape consistant

  o dans une première phase à calculer le nombre de tour dont a tourné la première roue dentée D1 à partir de la formule :

$$k_1 = \frac{z_1 - z_2 - p \cdot Z_2}{Z_2 - Z_1}$$

  ∘ Dans une deuxième phase, pour i = 2 à n :

  • Calculer $k_i$ à partir de la formule suivante :

$$'k_i = \frac{(k_1 + p) \cdot Z_2 + z_2 - z_i}{Z_i} \qquad (5)$$

  • Déterminer si la valeur de ki est une valeur possible en vérifiant les conditions suivantes :

$$\begin{cases} 0 \le k_i \le \dfrac{PPCM(Z_i, i \in \{1, 2, ..., n\})}{Z_i} - 1 \\ E(k_i) - k_i = 0 \end{cases} \qquad (6)$$

    - Si la valeur de ki est une valeur possible en vérifiant ces conditions (6) alors recommencer la deuxième phase pour une nouvelle valeur de « i » égale à i + 1 :
    - Si la valeur de ki ne vérifie pas ces conditions (6) alors sortie de la boucle en « i », nouvelle valeur de « p » égale à p + 1,

- Si toutes les valeurs de ki sont possibles: sortie de la boucle en « p » et calcul du nombre de sollicitations à partir de la formule suivante :

$$N = k_1 \cdot Z_1 + z_1 = (\frac{z_1 - z_2 - p \cdot Z_2}{Z_2 - Z_1}).Z_1 + z_1$$

- P étant la valeur pour laquelle tous les ki vérifient les conditions (6).

Dans chacun des exemples de réalisation, dans le cas où le nombre d'événements à calculer est inférieur au nombre de dents de l'une des roues dentées, la détermination de ce nombre d'événements peut être déterminé directement en comptant l'écart du nombre de dents zi entre la position initiale et la position finale de cette roue à l'issue de la durée T, cet écart étant compris dans l'intervalle $[0 , Z_i - 1]$.

Les figures 7a et 7b montrent un autre exemple d'un dispositif MEMS qui ne tombe pas sous l'étendue de protection de la présente invention avec des moyens de mesure angulaire de type résistifs. Ce dispositif comporte un premier support 600 apte à se déplacer cycliquement selon une direction longitudinale X par rapport à un second support 601 supposé fixe, le premier support reprenant sa position initiale après chaque déplacement. Il comporte aussi des premier et second moyens de comptage du nombre de déplacement pendant une durée T déterminée.

Les premiers moyens de comptage 596 comportent :

- une première roue dentée $D_1$ comportant Z1=1000 dents sur laquelle est fixée un moyeu monobloc axial 560 constitué de quatre cylindres coaxiaux 561, 562, 563 et 564, ce dernier étant apte à s'encastrer dans un alésage cylindrique pratiqué dans le second support 601 et de sorte que le plan de la roue dentée soit parallèle à celui de ce second support.

- Des premiers moyens d'entrainement $607_1$ de la première roue dentée $D_1$, ces moyens comportant une base fixée sur l'une des faces principale 602 du premier support 600 et sur laquelle est fixée une poutre d'entrainement 610 disposée longitudinalement et comportant une dent à son extrémité libre, cette dent étant agencée de sorte à former un engrenage avec la première roue dentée $D_1$,

- Des premiers moyens anti-retour non représentés sur la figure 7a pour une question de clarté de la figure, ces moyens étant similaires à ceux de la figure 3a.

Les seconds moyens de comptage 597 comportent :

- une seconde roue dentée $D_2$ comportant $Z_2 = 999$ dents, et sur laquelle est fixé un moyeu monobloc axial 560 constitué de quatre cylindres coaxiaux 561, 562, 563 et 564, ce dernier étant apte à s'encastrer dans un alésage cylindrique pratiqué dans le second support 601 et de sorte que le plan de la roue dentée soit parallèle à celui de ce second support.

- Des seconds moyens d'entrainement $607_2$ de la première roue dentée $D_1$, ces moyens comportant une base fixée sur l'une des faces principale 603 du premier support 600 et sur laquelle est fixée une poutre d'entrainement 610 disposée longitudinalement et comportant une dent à son extrémité libre, cette dent étant agencée de sorte à former un engrenage avec la première roue dentée $D_1$,

Ainsi, lorsque le premier support 600 se déplace selon la direction X par rapport au second support 601, d'une part, la dent des premiers moyens d'entrainement 596 entrainent la première roue dentée $D_1$ en rotation dans le sens horaire indiqué par la flèche tandis que la dent des moyens anti-retour glisse sur les dents de la première roue dentée de par la forme de la dent et l'élasticité de la poutre associée et, d'autre part, la dent des seconds moyens d'entrainement 597 entrainent, simultanément, la seconde roue dentée $D_2$ en rotation dans le sens horaire indiqué par la flèche tandis que la dent des moyens anti-retour glisse sur les dents de la première roue dentée de par la forme de la dent et l'élasticité de la poutre associée.

Chacun des moyens de comptage 596, 597 comportent en outre des moyens 598, 599 de mesure du déplacement angulaire desdites roues.

Ces moyens de mesure du déplacement angulaire desdites roues comportent, associés à chacune des roues, :

- un curseur 565 en forme de S non symétrique et comportant un anneau central 566 solidarisé au moyeu 560 selon un plan sensiblement parallèle à celui de la roue, l'anneau central 566 prenant appui contre les second et troisième cylindres coaxiaux 562 et 563, ce curseur 565 comportant un premier micro-contacteur 567 à sa première extrémité et un second micro-contacteur 568 à sa seconde extrémité, ces micro-contacteurs se trouvant à des diamètres différents par rapport à l'axe 619 du moyeu 560.
- une première piste externe annulaire résistive continue 620 (pour faire comme dans le brevet EP546907) déposée sur le support 601, axée sur l'axe du moyeu 560 et dont le diamètre moyen est tel qu'elle soit en contact avec le premier contacteur 567.
- une seconde piste interne annulaire conductrice continue 621 de diamètre plus petit que celui de la piste annulaire résistive qui est déposée sur le support 601, axée sur l'axe du moyeu 560 et dont le diamètre moyen est tel qu'elle soit en contact avec le second contacteur 568.

- Trois points d'accès électrique pour l'application de tensions de référence, sont régulièrement répartis sur la piste résistive 1 et la piste conductrice 2 constitue un point d'accès au curseur 565, pour le relevé des mesures. Les différents points d'accès sont reliés à une prise 569 pour les premiers moyens de comptage 596 et 570 pour les seconds moyens de comptage 597. Préférentiellement les trois points A, B, C sont équidistants.

Ainsi la configuration est conforme à celle présentée à la figure 1 du brevet EP546907 et le procédé associé pour calculer le déplacement angulaire de la roue peut aussi être mis en œ uvre dans le cadre de la figure 7a. Il est ainsi possible de déterminer l'angle de rotation des roues entre deux mesures successives. A partir de la connaissance de cet angle de déplacement entre deux mesures successives par exemple aux temps ti et tf correspondant à une durée T et du nombre de dents de chacune des roues dentées, on peut calculer, éventuellement par des moyens de calcul, les nombres $z_1$ et $z_2$ correspondant respectivement au nombre de dents dont a tourné, par rapport à leur position d'origine, chacune des dents D1 et D2 puis le nombre d'événements survenus correspondant à partir des formules 1) et 2).

La figure 8 montre un : autre exemple d'un dispositif MEMS qui ne tombe pas sous l'étendue de protection de la présente invention avec des moyens de mesure angulaire de type résistifs.

Dans cet exemple, les deux roues dentées 701, 702 sont disposées conformément à la figure 4 sur un même axe 704, ces roues étant superposées, l'une inférieure 702 et l'autre supérieure 701 par rapport au support 708. Les moyens de comptage comportent des premiers moyens 709 de mesure du déplacement angulaire de la roue inférieure 702 et des seconds moyens 710 de mesure d'écart angulaire entre la position angulaire de la roue supérieur et celle de la roue inférieure. Les premier moyens 709 sont conformes à ceux décrit dans le cadre des figures 7a et 7b. Les seconds moyens 710 comportent d'une part un curseur selon la figure 7b solidaire de la roue dentée supérieure 701 et interposé entre les deux roues dentées 701, 702 et d'autre part une piste annulaire résistive et une piste annulaire conductrice de plus petit diamètre disposées sur la face supérieure 703 de la seconde roue dentée 702 et de sorte que le premier micro-contacteur du curseur soit en contact avec la piste résistive et que le second micro-contacteur du curseur soit en contact avec la piste conductrice. Les différents points de contact sont reliés à une prise extérieure par des contacts glissants.

Ainsi, à partir de la connaissance de l'angle $\alpha$ de déplacement de la roue inférieure 702 mesuré par les seconds moyens 710 entre les instants ti et tf correspondant à une durée T et du nombre de dents de cette roues dentées, on peut calculer, éventuellement par des moyens de calcul, le nombre $z_2$ correspondant au nombre de dents dont a tourné cette roue 702, par rapport à sa position d'origine à l'instant ti.

Ensuite à partir de la valeur de a, du et de la variation $\beta$ d'écart angulaire entre les roues 701 et 702 mesurée par les premiers 709 moyens entre les instants ti et tf, on calcule simplement, éventuellement avec des moyens de calcul, l'angle $\delta$ de déplacement de la roue supérieure 701, puis à partir de $\delta$ et de la valeur du nombre de dent de la roue supérieur 701, on calcule, la valeur de $z_1$. Il suffit ensuite de calculer le nombre d'événement survenus à partir de l'une ou l'autre des formules 1) et 2).

Bien évidemment, de nombreuses modifications peuvent être apportées aux exemples de réalisation décrits sans sortir du cadre de l'invention qui est défini par les revendications. Ainsi, le repère permettant d'attribuer à chaque dent de la roue un numéro d'ordre par rapport à ce repère peut, non seulement être constitué par un trait radial mais aussi par exemple en un trait non radial, en un point, en une figure géométrique, en une gravure, en une fente, en un surplus de matière ou en l'ajout d'un élément supplémentaire de dimension plus faible que celle de la roue.

Par ailleurs, les moyens anti-retours peuvent aussi consister en des moyens de freinage de la roue dentée comme par exemple un patin apte à frotter sur la roue.

Dans le cadre de la figure 5, les roues peuvent soit être entrainées par des moyens d'entrainement respectifs soit une roue intermédiaire peut être utilisée, une première roue étant entrainée par des moyens d'entrainement et entrainant elle-même la roue intermédiaire qui entraine elle-même la seconde roue.

## Revendications

1. Procédé de comptage d'événements survenus pendant une durée T mis en œuvre par un compteur mécanique d'événements de type MEMS comportant au moins deux roues dentées de même pas, une première roue dentée $D_i$ comportant $Z_i$ dents et une seconde roue dentée $D_j$ en possédant $Z_j$ avec $Z_i$ différents de $Z_j$ et le PGCD de $Z_j$ et $Z_j$ étant différent de $Z_i$ ou $Z_j$ et préférablement égal à 1, chacune de ces roues dentées comportant au moins un repère détecté par des moyens optiques et permettant d'attribuer à chaque dent de la roue un numéro d'ordre par rapport à ce repère et la survenance d'un événement à compter produisant la rotation de chacune de ces deux roues d'un angle correspondant, à leur périphérie, à une corde égale au pas de leurs dents et la position initiale des roues par rapport à une marque extérieure ayant été repérée, le procédé comportant par ailleurs étapes suivantes :

- compter, pour chacune des roues Di, Dj, à l'issue de la durée T, l'écart du nombre de dents $z_i$, respectivement $z_j$ entre sa position initiale et sa position finale à l'issue de la durée T, cet écart étant compris entre 0 et $z_i$, respectivement entre 0 et $z_j$.
- à calculer, si $z_i$ est différent de $z_j$, le nombre d'événements survenus N en fonction de la différence entre les valeurs $z_i$ et $z_j$ et en fonction de $Z_i$ et/ou $Z_j$.

2. Procédé selon la revendication 1, **caractérisé en ce qu'**il comporte les étapes suivantes :

- une première étape consistant à compter, pour au moins une première et une seconde roues $D_i$, $D_j$ à l'issue de la durée T, l'écart du nombre de dents $z_i$, respectivement $Z_j$ entre leur position initiale et leur position finale à l'issue de la durée T, cet écart étant compris entre 0 et $(Z_i - 1)$ pour la première et 0 et $(Z_j -1)$ pour la seconde,
- une seconde étape consistant, pour au moins une valeur entière p comprise entre 0 et $P_{max}$ avec :

$$p_{Max} = \frac{PPCM\left(Z_i, i \in \{1, 2, ..., n\}\right)}{Z_j} - \frac{PPCM\left(Z_i, i \in \{1, 2, ..., n\}\right)}{Z_i}$$

- soit à calculer le nombre de tours ki dont a tourné la première roue Di en fonction de la différence $(Z_j - Z_i)$.entre les valeurs du nombre de dents des première et seconde roues $D_i$, $D_j$ et de la différence $(z_i - z_j)$ entre les écarts comptés, pour chaque roue entre sa position initiale et sa position finale, puis à calculer le nombre d'événements survenus pendant la durée T à partir de la formule suivante :

$$N = k_i \cdot Z_i + z_i$$

- soit à calculer le nombre d'événements survenus pendant la durée T à partir de la formule suivante

$$N = \left(\frac{z_i - z_j - p \cdot Z_j}{Z_j - Z_i}\right).Z_i + z_i$$

3. Procédé selon l'une quelconque des revendications 1 et 2, **caractérisé en ce qu'**il comporte une étape intermédiaire consistant à calculer le nombre de tours effectués par chacune des roues à partir des valeurs $z_i$ et $z_j$ et de la différence entre les valeurs $z_i$ et $z_j$.

4. Procédé selon l'une quelconque des revendications 1 à 3, mis en œuvre par un compteur mécanique ne comportant que deux roues dentées $D_1$ et $D_2$, le procédé comportant par ailleurs une étape de calcul du nombre d'événements survenus N à partir de l'une des formules suivantes :

$$N=[(z_2-z_1)/(Z_1-Z_2)]*Z_1+ z_1$$

$$N=[(z_2-z_1)/(Z_1-Z_2)]*Z_2+ z_2$$

5. Procédé selon l'une quelconque des revendications 1 à 3, **caractérisé en ce qu'**il comporte les étapes suivantes :

- une première étape consistant à compter, pour chacune des n roues dentées $D_1$ à $D_n$, à l'issue de la durée T l'écart du nombre de dents zi entre sa position initiale et sa position finale à l'issue de la durée T, cet écart étant compris entre 0 et $Z_{i-1}$,
- une seconde étape consistant à calculer une valeur Pmax telle que :

$$p_{\max} = \frac{PPCM\left(Z_i, i \in \{1, 2, ..., n\}\right)}{Z_2} - \frac{PPCM\left(Z_i, i \in \{1, 2, ..., n\}\right)}{Z_1}$$

- une troisième étape consistant pour P=0 à $P_{\max}$ :

    ○ dans une première phase à calculer le nombre de tour dont a tourné la première roue dentée D1 à partir de la formule :

$$k_1 = \frac{z_1 - z_2 - p \cdot Z_2}{Z_2 - Z_1}$$

    ○ Dans une deuxième phase, pour i = 2 à n :

        • Calculer $k_i$ à partir de la formule suivante :

$$k_i = \frac{(k_1 + p) \cdot Z_2 + z_2 - z_i}{Z_i} \tag{5}$$

        • Déterminer si la valeur de ki est une valeur possible en vérifiant les conditions suivantes :

$$\begin{cases} 0 \le k_i \le \dfrac{PPCM\left(Z_i, i \in \{1, 2, ..., n\}\right)}{Z_i} - 1 \\ E(k_i) - k_i = 0 \end{cases} \tag{6}$$

    $E(k_i)$ étant la partie entière de $k_i$

        - Si la valeur de ki est une valeur possible en vérifiant ces conditions (6) alors recommencer la deuxième phase pour une nouvelle valeur de « i » égale à i + 1 :

            - Si la valeur de ki ne vérifie pas ces conditions (6) alors sortie de la boucle en « i », et recommencer la troisième étape avec une nouvelle valeur de « P » égale à P + 1

    - Si toutes les valeurs de ki sont possibles : sortie de la boucle en « P » et calcul du nombre de sollicitations N à partir de la formule suivante :

$$N = k_1 \cdot Z_1 + z_1 = \left(\frac{z_1 - z_2 - p \cdot Z_2}{Z_2 - Z_1}\right).Z_1 + z_1$$

P étant la valeur pour laquelle tous les ki vérifient les conditions (6).

**6.** Compteur mécanique d'événements de type MEMS comportant un premier support (200, 300, 400, 500) et un second support (201, 301, 401, 401, 501), le premier support (200, 300, 400, 500) étant apte à se déplacer cycliquement selon une direction longitudinale X par rapport au second support (501) supposé fixe, le premier support reprenant sa position initiale après chaque déplacement et des moyens de comptage du nombre de déplacement entre un instant ti et un instant tf correspondant à une durée T, ces moyens de comptage étant aptes à mettre en oeuvre le procédé selon l'une quelconque des revendications 1 à 5 et comportant :

    - au moins deux roues dentées solidaires de l'un ou l'autre des premier et second supports et, une première roue dentée $D_i$ comportant $Z_i$ dents régulièrement espacées avec un pas $p_i$ et apte à tourner autour d'un premier axe et une seconde roue dentée $D_j$ en possédant $Z_j$ régulièrement espacées avec un pas $p_j$, et apte à tourner autour d'un second axe, chacune de ces roues dentées comportant au moins un repère radial apte à permettre d'attribuer à chaque dent de la roue un numéro d'ordre par rapport à ce repère,
- des moyens d'entrainement des deux roues dentées en rotation lors de la survenance du même événement à compter, et des moyens anti retour (217, 317, 417, ARi),
- compteur mécanique d'événements dans lequel les pas $p_i$ et $p_j$ des dents sont identiques et lesdits moyens d'entrainement des deux roues dentées en rotation lors de la survenance du même événement à compter entrainent les roues dentées $D_i$, $D_j$ d'un angle égal aux pas $p_i$ et $p_j$ des dents de ces roues et le nombre de dents $z_i$ de la première roue dentée $D_i$ est différents celui $Z_j$ de la seconde roue dentée $D_j$ et le PGCD de $Z_i$ et $Z_j$ est différent de $Z_j$ ou $Z_j$ et préférablement égal à 1.

7. Compteur mécanique d'événements selon la revendication 6 **caractérisé en ce que** les moyens d'entrainement entraînent la première roue dentée $D_i$ par une première liaison de type engrenage et la première roue dentée entraine la seconde roue dentée par une seconde liaison aussi de type engrenage.

8. Compteur mécanique d'événements selon la revendication 6 **caractérisé en ce qu'**il comporte :

   - des premiers moyens d'entrainement comportant une poutre d'entrainement terminée par une dent de la première roue dentée $D_i$, et des premiers moyens anti-retour de cette roue,
   - des seconds moyens d'entrainement comportant une poutre d'entrainement terminée par une dent de la seconde roue dentée $D_j$, et des seconds moyens anti-retour de cette roue.

9. Compteur mécanique d'événements selon l'une quelconque des revendications 6 et 8, **caractérisé en ce que** les premier et second axes des roues dentées $D_i$ et $D_j$ sont colinéaires ou confondus.

10. Compteur mécanique d'événements selon la revendication 9, **caractérisé en ce que** l'une des première et seconde roues dentées $D_i$, $D_j$ comporte des indications chiffrées ou colorées ou tout autre moyens permettant de déduire sa position angulaire tandis que l'autre comporte une ouverture sur une partie d'un secteur, cette ouverture rendant visible une partie des dites indications chiffrées ou colorées.

**Patentansprüche**

1. Verfahren zum Zählen auftretender Ereignisse während eines Zeitraums T, das von einem mechanischen Ereigniszähler vom Typ MEMS durchgeführt wird, der mindestens zwei Zahnräder mit derselben Teilung aufweist, ein erstes Zahnrad $D_i$, das $Z_i$ Zähne aufweist und ein zweites Zahnrad $D_j$, das davon $Z_j$ mit $Z_i$ unterschiedlich von $Z_j$ besitzt und wobei der ggT von $Z_i$ und $Z_j$ von $Z_i$ oder $Z_j$ unterschiedlich und vorzugsweise gleich 1 ist, wobei jedes von diesen Zahnrädern mindestens eine Markierung aufweist, die von optischen Mitteln ermittelt wird und erlaubt, jedem Zahn des Rades eine laufende Nummer in Bezug auf diese Markierung zuzuweisen und das Auftreten eines zu zählenden Ereignisses die Rotation jedes dieser zwei Räder in einem Winkel bewirkt, der an ihrer Peripherie einer Sehne gleich der Teilung ihrer Zähne entspricht und die Ausgangsposition der Räder in Bezug auf eine Außenmarke markiert wurde, wobei das Verfahren ferner die folgenden Schritte aufweist:

   - das Zählen, für jedes der Räder Di, Dj nach Ablauf des Zeitraums T, den Unterschied der Anzahl von Zähnen $z_i$ beziehungsweise $z_j$ zwischen seiner Ausgangsposition und seiner Endposition nach Ablauf des Zeitraums T, wobei dieser Unterschied zwischen 0 und $z_i$ beziehungsweise zwischen 0 und $Z_j$ liegt,
   - das Berechnen, wenn $z_i$ von $z_j$ unterschiedlich ist, der Anzahl auftretender Ereignisse N in Abhängigkeit von der Differenz zwischen den Werten $z_i$ und $z_j$ und in Abhängigkeit von $z_i$ und/oder $z_j$.

2. Verfahren nach Anspruch 1, **dadurch gekennzeichnet, dass** es die folgenden Schritte aufweist:

   - einen ersten Schritt, der darin besteht, für mindestens ein erstes und ein zweites Rad $D_i$, $D_j$ nach Ablauf des Zeitraums T den Unterschied der Anzahl von Zähnen $z_i$ beziehungsweise $z_j$ zwischen ihrer Ausgangsposition und ihrer Endposition nach Ablauf des Zeitraums T zu zählen, wobei dieser Unterschied zwischen 0 und $[Z_i - 1]$ für das erste und 0 und $[Z_j - 1]$ für das zweite liegt,
   - einen zweiten Schritt, der darin besteht, für mindestens einen ganzzahligen Wert p zwischen 0 und $P_{max}$ mit:

$$p_{Max} = \frac{PPCM(Z_i, i \in \{1, 2, ..., n\})}{Z_j} - \frac{PPCM(Z_i, i \in \{1, 2, ..., n\})}{Z_i}$$

- entweder die Anzahl von Umdrehungen ki zu berechnen, die das erste Rad Di in Abhängigkeit von der Differenz $(Z_j - Z_i)$ zwischen den Werten der Anzahl von Zähnen des ersten und zweiten Rades $D_i$, $D_j$ und der Differenz $(z_i - z_j)$ zwischen den für jedes Rad zwischen seiner Ausgangsposition und seiner Endposition gezählten Unterschieden absolviert hat, dann die Anzahl während des Zeitraums T auftretender Ereignisse auf der Basis der folgenden Formel zu berechnen:

$$N = k_i \cdot Z_i + z_i$$

- oder die Anzahl während des Zeitraums T auftretender Ereignisse auf der Basis der folgenden Formel zu berechnen:

$$N = \left(\frac{z_i - z_j - p \cdot Z_j}{Z_j - Z_i}\right)Z_i + z_i$$

3. Verfahren nach einem der Ansprüche 1 und 2, **dadurch gekennzeichnet, dass** es einen Zwischenschritt umfasst, der darin besteht, die Anzahl von Umdrehungen, die von jedem der Räder absolviert wurden, auf der Basis der Werte $z_i$ und $z_j$ und der Differenz zwischen den Werten $Z_i$ und $Z_j$ zu berechnen.

4. Verfahren nach einem der Ansprüche 1 bis 3, das von einem mechanischen Zähler durchgeführt wird, der nur zwei Zahnräder $D_1$ und $D_2$ aufweist, wobei das Verfahren ferner einen Berechnungsschritt der Anzahl auftretender Ereignisse N auf der Basis der folgenden Formeln aufweist:

$$N = [(z_2 - z_1) / (Z_1 - Z_2)] * Z_1 + z_1$$

$$N = [(z_2 - z_1) / (Z_1 - Z_2)] * Z_2 + z_2$$

5. Verfahren nach einem der Ansprüche 1 bis 3, **dadurch gekennzeichnet, dass** es die folgenden Schritte aufweist:

- einen ersten Schritt, der darin besteht, für jedes der n Zahnräder $D_1$ bis $D_n$ nach Ablauf des Zeitraums T den Unterschied der Anzahl von Zähnen zi zwischen seiner Ausgangsposition und seiner Endposition nach Ablauf des Zeitraums T zu zählen, wobei dieser Unterschied zwischen 0 und $Z_{i-1}$ liegt,
- einen zweiten Schritt, der darin besteht, einen Wert Pmax zu berechnen, der derart ist, dass:

$$p_{max} = \frac{PPCM(Z_i, i \in \{1, 2, ..., n\})}{Z_2} - \frac{PPCM(Z_i, i \in \{1, 2, ..., n\})}{Z_1}$$

- einen dritten Schritt, der für p=0 bis $P_{max}$ darin besteht:

o in einer ersten Phase die Anzahl von Umdrehungen, die das erste Zahnrad D1 absolviert hat, auf der Basis der Formel zu berechnen:

$$k_1 = \frac{z_1 - z_2 - p \cdot Z_2}{Z_2 - Z_1}$$

o in einer zweiten Phase für i = 2 bis n:

• $k_i$ auf der Basis der folgenden Formel zu berechnen:

$$k_i = \frac{(k_1 + p) \cdot Z_1 + z_1 - z_i}{Z_i} \qquad (5)$$

• zu bestimmen, ob der Wert von ki ein möglicher Wert ist, durch Überprüfen der folgenden Bedingungen:

$$\begin{cases} 0 \le k_i \le \dfrac{PPCM(Z_i, i \in \{1, 2, ..., n\})}{Z_i} - 1 \\ E(k_i) - k_i = 0 \end{cases} \qquad (6)$$

wobei $E(k_i)$ der ganzzahlige Teil von $k_i$ ist

- wenn der Wert von ki ein möglicher Wert ist, durch Überprüfen dieser Bedingungen (6), dann erneute Durchführung der zweiten Phase für einen neuen Wert von "i" gleich i + 1:

- wenn der Wert von ki diese Bedingungen (6) nicht bestätigt, dann Verlassen der "i"-Schleife und erneute Durchführung des dritten Schritts mit einem neuen Wert von "P" gleich P + 1

- wenn alle Werte von ki möglich sind: Verlassen der "P"-Schleife und Berechnen der Anzahl von Beanspruchungen N auf der Basis der folgenden Formel:

$$N = k_i \cdot Z_i + z_i = (\frac{z_1 - z_i - p \cdot Z_1}{Z_1 - Z_i}) Z_i + z_i$$

wobei P der Wert ist, für den alle ki die Bedingungen (6) bestätigen.

6. Mechanischer Ereigniszähler von Typ MEMS, der eine erste Unterlage (200, 300, 400, 500) und eine zweite Unterlage (201, 301, 401, 401, 501) aufweist, wobei die erste Unterlage (200, 300, 400, 500) imstande ist, sich zylindrisch gemäß einer Längsrichtung X in Bezug auf die zweite Unterlage (501) zu verlagern, die als fest angenommen wird, wobei die erste Unterlage nach jeder Verlagerung ihre Ausgangsposition annimmt, und Mittel zum Zählen der Anzahl von Verlagerungen zwischen einem Moment ti und einem Moment tf, was einem Zeitraum T entspricht, wobei diese Zählmittel imstande sind, das Verfahren nach einem der Ansprüche 1 bis 5 durchzuführen und aufweist:

- mindestens zwei Zahnräder, die mit der einen oder der anderen von der ersten und zweiten Unterlage fest verbunden sind, und wobei, wobei ein erstes Zahnrad $D_i$ $Z_i$ Zähne aufweist, die mit einer Teilung $p_i$ regelmäßig beabstandet sind und imstande, um eine erste Achse zu drehen und ein zweites Zahnrad $D_j$ davon $Z_j$ besitzt, die mit einer Teilung $p_j$ regelmäßig beabstandet sind und imstande, um eine zweite Achse zu drehen, jedes dieser Zahnräder mindestens eine radiale Markierung aufweist, die imstande ist, jedem Zahn des Rades eine laufende Nummer in Bezug auf diese Markierung zuzuweisen,
- Rotationsantriebsmittel der zwei Zahnräder beim Auftreten desselben zu zählenden Ereignisses, und Rücklaufsperrmittel (217, 317, 417, ARi),
- einen mechanischen Ereigniszähler, wobei die Teilungen $p_i$ und $p_j$ der Zähne identisch sind und die Rotationsantriebsmittel der zwei Zahnräder beim Auftreten desselben zu zählenden Ereignisses die Zahnräder $D_i$, $D_j$ in einem Winkel antreiben, der gleich der Teilung $p_i$ und $p_j$ der Zähne dieser Räder ist und die Anzahl von Zähnen $z_i$ des ersten Zahnrades $D_i$ unterschiedlich von $Z_j$ des zweiten Zahnrades $D_j$ ist und der ggT von $Z_i$ und $Z_j$ unterschiedlich von $Z_i$ oder $Z_j$ und vorzugsweise gleich 1 ist.

7. Mechanischer Ereigniszähler nach Anspruch 6, **dadurch gekennzeichnet, dass** die Antriebsmittel das erste Zahnrad $D_i$ durch eine erste Verbindung vom Typ Getriebe antreiben und das erste Zahnrad das zweite Zahnrad durch eine zweite Verbindung ebenfalls vom Typ Getriebe antreibt.

8. Mechanischer Ereigniszähler nach Anspruch 6, **dadurch gekennzeichnet, dass** er aufweist:

- erste Antriebsmittel, die einen Antriebsbalken aufweisen, der von einem Zahn des ersten Zahnrads $D_i$ beendet

wird, und erste Rücklaufsperrmittel dieses Rades,
- zweite Antriebsmittel, die einen Antriebsbalken aufweisen, der von einem Zahn des zweiten Zahnrads $D_j$ beendet wird, und zweite Rücklaufsperrmittel dieses Rades.

9. Mechanischer Ereigniszähler nach einem der Ansprüche 6 und 8, **dadurch gekennzeichnet, dass** die erste und zweite Achse der Zahnräder $D_i$ und $D_j$ kolinear sind oder zusammenfallen.

10. Mechanischer Ereigniszähler nach Anspruch 9, **dadurch gekennzeichnet, dass** eins von dem ersten und zweiten Zahnrad $D_i$, $D_j$ bezifferte oder farbige Angaben oder jedes andere Mittel aufweist, das erlaubt, seine Winkelposition abzuleiten, wohingegen das andere eine Öffnung auf einem Teil eines Sektors aufweist, wobei diese Öffnung einen Teil der bezifferten oder farbigen Angaben sichtbar macht.

**Claims**

1. A method for counting events that occurred in a duration T implemented by a MEMS mechanical event counter comprising at least two toothed wheels, the pitch of the teeth being the same, a first toothed wheel $D_i$ comprising $Z_i$ teeth and a second toothed wheel $D_j$ having $Z_j$ teeth with $Z_i$ being different from $Z_j$ and the greatest common divisor of $Z_i$ and $Z_j$ being different from $Z_i$ or $Z_j$ and preferably equal to 1, each of the toothed wheel having at least one mark that is detected by optical means and allows to assign to each tooth of the wheel an order number with respect to this mark and the occurrence of an event causing the rotation of each of these two wheels by an angle corresponding, at their periphery, to a chord equal to the pitch of their teeth and the initial position of the wheels with respect to an outer mark which has been marked, the method furthermore comprising the following steps:

   - counting, for each wheel $D_i$, $D_j$, at the end of the duration T, the difference in the number of teeth $z_i$, respectively $z_j$ between its initial position and its final position at the end of the duration T, this difference being between 0 and $Z_i$, respectively between 0 and $Z_j$,
   - calculating, if $z_i$ is different from $z_j$, the number N of events that occurred as a function of the difference between the values $z_i$ and $z_j$ and as a function of $Z_i$ and/or $Z_j$.

2. The method according to claim 1, **characterised in that** it comprises the following steps:

   - a first step consisting in counting, for at least one first and on second wheels $D_i$, $D_j$ at the end of the duration T, the difference in the number of teeth $z_i$, respectively $z_j$ between their initial position and their final position at the end of the duration T, this difference being between 0 and $(Z_i-1)$ for the first one and 0 and $(Z_j-1)$ for the second one,
   - a second step consisting, for at least one integer value between 0 and $P_{max}$ with:

$$P_{Max} = \frac{LCM(Z_i, i \in \{1, 2, ..., n\})}{Z_j} - \frac{LCM(Z_i, i \in \{1, 2, ..., n\})}{Z_i}$$

   - either in calculating the number of revolutions ki the first wheel $D_i$ turned of as a function of the difference $(Z_j-Z_i)$ between the values of the number of teeth of the first and second wheels $D_i$, $D_j$ and of the difference $(z_i-z_j)$ between the differences counted, for each wheel between its initial position and its final position, and then calculating the number of events that occurred during the duration T from the following formula:

$$N = k_i . Z_i + z_i$$

   - or in calculating the number of events that occurred during the duration T from the following formula:

$$N = \left( \frac{z_i - z_j - p . Z_j}{Z_j - Z_i} \right) . Z_i + z_i$$

3. The method according to any of claims 1 and 2, **characterised in that** it comprises an intermediary step consisting in calculating the number of revolutions performed by each wheel from the values $z_i$ and $z_j$ and the difference between the values $Z_i$ and $Z_j$.

4. The method according to any of claims 1 to 3, implemented by a mechanical counter having only two toothed wheels $D_1$ and $D_2$, the method furthermore comprising a step for calculating the number of events that occurred from one of the following formulae:

$$N = [(z_2-z_1)/(Z_1-Z_2)]*Z_1+z_1$$

$$N = [(z_2-z_1)/(Z_1-Z_2)]*Z_2+z_2$$

5. The method according to any of claims 1 to 3, **characterized in that** it comprises the following steps:

- a first step consisting in counting, for each of n toothed wheels $D_1$ to $D_n$, at the end of the duration T, the difference in the number of teeth $z_i$ between its initial position and its final position at the end of the duration T, this difference being between 0 and $Z_{i-1}$,
- a second step consisting in calculating a value $P_{max}$ such as:

$$P_{Max} = \frac{LCM(Z_i, i \in \{1, 2, ..., n\})}{Z_2} - \frac{LCM(Z_i, i \in \{1, 2, ..., n\})}{Z_1}$$

- a third step consisting, for p=0 to $P_{max}$:

o during a first phase, calculating the number of revolutions the first toothed wheel D1 turned of from the formula:

$$k_1 = \frac{z_1 - z_2 - p.Z_2}{Z_2 - Z_1}$$

o during a second phase, for i=2 to N:

• calculating $k_i$ from the following formula:

$$k_i = \frac{(k_1+p)Z_1 + z_1 - z_i}{Z_i} \qquad (5)$$

• determining if the value ki is a possible value by meeting the following conditions:

$$\begin{cases} 0 \leq k_i \leq \frac{LCM(Z_i, i \in \{1, 2, ..., n\})}{Z_i} - 1 \\ E(k_i) - k_i = 0 \end{cases} \qquad (6)$$

- if the value ki is a possible value by meeting these conditions (6), then repeating the second phase for a new value "i" equal to i+1;
- if the value ki does not meet these conditions (6), then exiting the "i" loop and repeating the third phase with a new value "p" equal to p+1

- if all values ki are possible: exiting the "p" loop and calculating the number N of stresses from the following formula:

$$N = k_1 . Z_1 + z_1 = \left( \frac{z_1 - z_2 - p . Z_2}{Z_2 - Z_1} \right) . Z_1 + z_1$$

P being the value for which all the ki meet the conditions (6) .

6. A MEMS-type mechanical event counter comprising a first support (200, 300, 400, 500) and a second support (201, 301, 401, 501), the first support (200, 300, 400, 500) being adapted to move cyclically along a longitudinal direction X with respect to the second supposedly stationary support (501), the first support returning to its initial position after each displacement and means for counting the numbers of displacements between a time ti and a time tf corresponding to a duration T, the counting means being able to implement the method according to any one of claims 1 to 5 and comprising:

    - at least two toothed wheels secured to one or another of the first and second supports and, a first toothed wheel $D_i$ comprising $Z_i$ teeth evenly spaced with a pitch $p_i$ and adapted to rotate around a first axis and a second toothed wheel $D_j$ having $Z_j$ teeth evenly spaced with a pitch $p_j$, and adapted to rotate around a second axis, each toothed wheel comprising at least one radial mark adapted to allow to assign to each tooth of the wheel an order number with respect to this mark,
    - means for rotating both toothed wheels upon occurrence of the same event to be counted, and non-return means (217, 317, 417, Ari),
mechanical event counter in which the pitch $p_i$ and $p_j$ of the wheels are equal and the means for rotating both toothed wheel upon occurrence of the same event to be counted rotate the toothed wheel $D_i$, $D_j$ by an angle equal to the pitches $p_i$ and $p_j$ of the teeth of the wheels and the number of teeth $z_i$ of the first toothed wheel $D_i$ is different from that $Z_j$ of the second toothed wheel $D_j$ and the greatest common divisor of $z_i$ and $Z_j$ is different from $z_i$ or $Z_j$ and preferably equal to 1.

7. The mechanical event counter according to claim 6, **characterised in that** the rotating means rotate the first toothed wheel $D_i$ by a first gear type link and the first toothed wheel rotates the second toothed wheel by a second gear type link.

8. The mechanical event counter according to claim 6, **characterised in that** it comprises:

    - first rotating means comprising a driving beam ending by a tooth of the first toothed wheel $D_i$, and first non-return means for this wheel,
    - second rotating means comprising a driving beam ending by a tooth of the second toothed wheel $D_j$, and second non-return means for this wheel.

9. The mechanical event counter according to any of claims 6 and 8, **characterised in that** the first and second axes of the toothed wheels $D_i$ and $D_j$ are collinear or coincident.

10. The mechanical event counter according to claim 9, **characterised in that** one of the first and second toothed wheels $D_i$, $D_j$ comprises numerical or colored indications or any other means allowing to determine its angular position while the other comprises an opening on part of a sector, this opening making part of said numerical or colored indications visible.

Fig. 1a

Fig. 1b

Fig.2a

Fig.2b

Fig.3a

Fig. 3b

Fig. 3c

Fig. 4

Fig 5e

Fig.5d

Fig. 5c

Fig.5b

Fig.5a

Fig. 6

Fig. 7a

Fig. 7b

Fig. 8

**EP 3 191 799 B1**